# EUROPÄISCHE PATENTSCHRIFT

(11) **EP 1 798 735 B1**
(45) Veröffentlichungstag und Bekanntmachung des Hinweises auf die Patenterteilung: **29.06.2016**
(21) Anmeldenummer: 06025061.0
(22) Anmeldetag: 05.12.2006
(51) Int. Cl.: G21F 9/28, G21D 1/00

(54) **Verfahren für eine bedarfsgerechte und vorausschauende Handhabung und/oder Verwertung von strahlenbelastetem Material**
Method for as needed and anticipated handling and/or recycling of radioactive material
Procédé permettant de prévoir un maniement et/ou une utilisation de matériau irradié conforme aux besoins

(30) Priorität: 19.12.2005 DE 102005061106
(43) Veröffentlichungstag der Anmeldung: 20.06.2007
(73) Patentinhaber: Westinghouse Electric Germany GmbH, 68167 Mannheim (DE)
(72) Erfinder: Spicka, Michel, Dr., 69502 Hemsbach (DE); Hermes, Torsten, 68723 Schwetzingen (DE)
(74) Vertreter: Miller, Toivo

(56) Entgegenhaltungen:
- EP-A- 0 116 663
- EP-A- 0 174 797
- EP-A1- 0 307 271
- WO-A-95/23334
- DE-A1- 4 437 276
- DE-A1- 19 824 039
- JP-A- 4 235 400
- ANONYMOUS: 'Benutzerhandbuch FRM II' 30 Mai 2003, Seiten 18 - 20, XP055100355

## Beschreibung

Die Erfindung betrifft ein Verfahren für eine bedarfsgerechte und vorausschauende Handhabung und Verwertung von strahlenbelastetem Material eines Reaktordruckbehälters mit Einbauten, gemäß den Oberbegriffen des unabhängigen Anspruchs.

Bei bekannten Verfahren wird bei Stilllegung eines Kernkraftwerkes der radioaktiv belastete beziehungsweise strahlenbelastete Reaktor, insbesondere sein Reaktordruckbehälter (ROB) üblicherweise in Einzelteile zerlegt und diese in strahlensicheren Behältnissen (Container) endgelagert, um eine radioaktive Belastung beziehungsweise eine Strahlenbelastung der Umwelt möglichst zu vermeiden.

Aus der DE 44 37 276 A1 ist bekannt kontaminierte metallische Komponenten durch

Zerspanung schichtweise abzutragen, das abgetragene Material portionsweise bezüglich seiner Aktivität zu untersuchen und in Abhängigkeit der gemessenen aktuellen Aktivitätswerte entsprechend zu handhaben.

Weiterhin ist aus der DE 198 24 039 A1 ein Verfahren zur Prüfung von Schüttmaterial, insbesondere von Bauschutt und/oder Bodenaushub, auf den Gehalt an Radionukliden und zur Trennung des Schüttmaterials mit einem über einen vorgebbaren Grenzwert liegenden Anteil an Radionukliden vom Schüttmaterial mit einem unter dem vorgebbaren Grenzwert liegenden Anteil an Radionukliden bekannt.

In der JP 04235400 A ist ein Verfahren für eine rationellere Lagerung radioaktiver Abfälle angegeben, wobei vor Lagerung die Aktivität der jeweiligen Abfälle bestimmt und diese entsprechend klassifiziert werden.

Ein Verfahren zur kaskadierten Trennung von radioaktivem und nichtradioaktivem Material ist aus der EP 0 174 797 A2 bekannt geworden.

Die WO 95/23334 offenbart zudem ein Verfahren zur Bestimmung von Verunreinigungen einer Metallanhäufung, beispielsweise Alteisen, wobei die von den Verunreinigungen ausgehende Gammastrahlung bestimmt, analysiert und resultierend die jeweilige radioaktive Belastung der Metallanhäufung bestimmt wird.

Ein Verfahren zur Dekontamination der inneren Oberfläche eines Reaktorbehälters durch Abreinigung eines im Wesentlichen zweischichtigen Oxidbelages mittels Flüssigkeitsstrahl ist in der EP 0 116 663 A1 angegeben

Auch ist aus der EP 0 307 271 A1 eine Vorrichtung zur Charakterisierung von spaltbarem Material, welche einen im Innern eines Gammastrahlungsdetektionsszintillators eingebetteten Neutronenstrahlungsdetektor enthält, bekannt geworden.

Aus der BHB FRM-II ist auszugsweise ein Betriebshandbuch für eine kerntechnische Reaktoranlage bekannt, in welchem die Bearbeitung von Bestrahlungsaufträgen dargelegt wird.

Die Lagerung erfolgt dabei weitestgehend unabhängig von der jeweiligen Aktivität beziehungsweise Aktivierung der einzelnen Elemente unter maximal möglichen Sicherheitsvorkehrungen. Eine selektive und individuelle Überprüfung der Strahlenbelastung und/oder Aktivierung der verschiedenen Teile und/oder Materialien und/oder Werkstoffzusammensetzungen wird in aller Regel nicht durchgeführt. So werden alle Teile und/oder strahlenbelasteten Materialien eines stillgelegten Kernreaktors beziehungsweise Reaktordruckbehälters ungeachtet deren tatsächlichen Belastung und Aktivität gleich behandelt, was zu einem erheblichen Aufwand und Kosten führt. Eine bedarfsgerechte und damit umweltschonende und effiziente

Handhabung sowie Wiederverwertung des strahlenbelasteten Materials, insbesondere des Reaktordruckbehälters sowie seiner Einbauten, ist somit auch im Hinblick auf das Recycling der strahlenbelasteten Materialien nicht gegeben. Dies reduziert die Möglichkeiten einer Wiederverwertung vorgenannter Materialien oder Elemente auch im Sinne eines Recycling, auf ein Minimum.

Der Erfindung liegt die Aufgabe zugrunde vorgenannte Nachteile zu überwinden und eine effiziente Handhabung und/oder Verwertung von strahlenbelastetem Material eines Kernreaktors, insbesondere des Reaktordruckbehälters mit seinen Einbauten, zu ermöglichen.

Diese Aufgabe wird durch ein Verfahren mit den Merkmalen des Anspruchs 1 gelöst. Vorteilhafte Ausgestaltungen und Weiterbildungen des Verfahrens sowie ein System für eine bedarfsgerechte und vorausschauende Handhabung und/oder Verwertung von strahlenbelastetem Material eines Kernreaktors, insbesondere des Reaktordruckbehälters sowie seiner Einbauten, sind in weiteren Ansprüchen und der nachfolgenden Beschreibung angegeben.

Beim erfindungsgemäßen Verfahren für eine bedarfsgerechte und vorausschauende Handhabung und/oder Verwertung von strahlenbelastetem Material eines Kernreaktors, insbesondere des Reaktordruckbehälters sowie seiner Einbauten, wird die Aktivität des strahlenbelasteten Materials und/oder das Abklingverhalten wenigstens eines im aktivierten Material enthaltenen Radionuklids ermittelt. Vorgabenabhängig wird anhand der ermittelten Aktivitätswerte eine vorausschauende Bewertung der verschiedenen strahlenbelasteten Materialien und/oder Bereiche des Kernreaktors durchgeführt und bewertungsabhängig diejenigen selektiert, welche einer Wiederverwertung zuführbar sind.

Dadurch wird eine effiziente und bedarfsgerechte Handhabung, Nutzung und Wiederverwertung bestehender Ressourcen und Materialien eines Kernreaktors, insbesondere seines Reaktordruckbehälters ermöglicht und der Entsorgungsaufwand reduziert.

Dabei werden vorbestimmte Freigabegrenzen, welche beispielsweise als Freigrenzen zur Entlassung von strahlenbelastetem Material aus dem Geltungsbereich des Atomgesetztes aus der Strahlenschutzverordnung (StrISchV) und/oder internationalen Regelwerken entnehmbar sind, als Vorgaben berücksichtigt.

Als Material werden dabei nicht lediglich einzelne Werkstoffe, Stoffe, Verbindungen oder Legierungen verstanden, sondern auch Bereiche und/oder Teile des Reaktordruckbehälters sowie seiner Einbauten verstanden. Beispielhaft seien hier Kernbehälter, Trageplatten, Stutzen, Gitterplatten, Tragwerkszylinder, Kernumfassung, Stutzen, Plattierung und Führungsrohre genannt.

Bei einer vorteilhaften Ausgestaltung des Verfahrens erfolgt die Ermittlung der Aktivität und/oder des Abklingverhaltens der Aktivität schrittweise, wobei
eine Analyse der Aktivierung des Grundwerkstoffes des jeweiligen strahlenbelasteten Reaktordruckbehälters sowie seiner Einbauten durchgeführt wird und/oder in Abhängigkeit der Werkstoffzusammensetzung des jeweiligen Materials die Aktivierung vorbestimmbarer Bereiche bestimmt und/oder das Abklingverhalten der einzelnen Radionuklide in den aktivierten Bereichen des strahlenbelasteten Materials, zumindest näherungsweise bestimmt wird.

Eine weiterführende Ausgestaltung des Verfahrens umfasst eine Bestimmung der jeweiligen Werkstoffzusammensetzung. Diese kann im Zugriff auf empirische und/oder historische Daten und/oder durch Entnahme von Werkstoffproben und sich anschließende gängige Analysetechniken, beispielsweise chemische Analysen oder massenspektrometrische Untersuchungen durchgeführt werden.

Das Verfahren führt die Bestimmung der Aktivität des strahlenbelasteten Materials und/oder der Werkstoffzusammensetzung ortsaufgelöst durch.

Erfindungsgemäß ist weiterhin vorgesehen, dass bei der vorausschauenden Bewertung anhand des jeweils ermittelten Abklingverhaltens und der Aktivität derjenige Zeitpunkt bestimmt und/oder angegeben wird, bei welchem die Aktivität eines Materials und/oder Bereichs eine vorbestimmte Freigabegrenze erreicht und/oder unterschreitet, wodurch bestimmt wird, wann welches Material und/oder wann welcher Bereich der Wiederverwertung zuführbar ist.

Aktivität, Abklingverhalten, und der Zeitpunkt des Unterschreitens vorbestimmter Freigrenzen sind dabei für jedes im jeweiligen Material vorkommende Radionuklid spezifisch ermittelbar.

Erfindungsgemäß ist vorgesehen, dass anhand des Bewertungsergebnisses bei der Selektion differenziert Materialien und/oder Bereiche bestimmt und/oder gruppiert werden, die
- unmittelbar freigebbar und der Verwertung zuführbar sind ,
- nach Zwischenlagerung für einen vorbestimmten endlichen Zeitraum, beispielsweise 50 Jahre, freigebbar und der Wiederverwertung zuführbar sind,
- welche endzulagern und damit einer Verwertung nicht zuführbar sind.

Weiterhin kann vorgesehen werden, dass dem Kraftwerk schrittweise die einer Wiederverwertung nicht zuführbaren strahlenbelasteten Materialien und/oder Bereiche und/oder Teile entnommen und endgelagert werden und/oder die nach Zwischenlagerung freigebbaren Materialien und/oder Bereiche entnommen und zwischengelagert werden und/oder die unmittelbar freigebbaren Materialien und/oder Bereiche entnommen und wiederverwertet werden.

Beispielsweise werden bei einer bedarfsgerechten und vorausschauenden Handhabung und/oder Verwertung eines Reaktordruckbehälters und/oder dessen Einbauten zunächst die stark strahlenbelasteten Materialien, insbesondere die den Reaktordruckbehälter gegen Korrosion schützende Plattierung, abgetragen, entnommen und/oder endgelagert.

Weiterhin ist vorsehbar, dass nach Entnahme der Plattierung die übrigen Materialien und/oder Teile und/oder Bereiche separat entnommen und der Wiederverwertung zugeführt werden, wobei die verschiedenen Materialien und/oder Teile und/oder Bereiche entsprechend ihrem Aktivierungsgrad für unterschiedliche Zeiträume bis zu ihrer Freigabe zwischengelagert werden.

Vorteilhaft kann die Zwischenlagerung dabei im Kraftwerk beziehungsweise auf dem Kraftwerksgelände, beispielsweise in entsprechenden Behältnissen, erfolgen.

Auch kann bei Werkstoffen oder Materialien, insbesondere des Reaktordruckbehälters (RDB), welche die Freigabegrenzen nach einer angemessenen Wartezeit, beispielsweise 50 Jahren, erreichen, zur Wieder- beziehungsweise Weiterverwertung von einer Zerlegung des Reaktordruckbehälters in einzelne Teile abgesehen werden.

Ein System zur Ausführung des erfindungsgemäßen Verfahrens mit wenigstens einer Verarbeitungseinheit sowie Analyseeinrichtung, welche im Zusammenwirken die Aktivität des strahlenbelasteten Materials und/oder das Abklingverhalten wenigstens eines im aktivierten Material enthaltenen Radionuklids ermitteln und/oder im Zugriff auf wenigstens einen Datenspeicher vorgabenabhängig anhand der ermittelten Aktivitätswerte eine vorausschauende Bewertung und Selektion derjenigen Materialien durchführen, welche einer Wiederverwertung zuführbar sind, wird ebenfalls beschrieben.

Ein entsprechend ausgestalteter RDB mit einer Plattierung, welche hinsichtlich ihrer Dicke und/oder ihrer chemischen Zusammensetzung derart ausgebildet ist, dass die Hülle des Reaktordruckbehälters weitgehend gegen radioaktive Strahlung geschützt und isoliert ist und damit eine Aktivierung durch vom Kern ausgehende Neutronen/Gammastrahlung minimiert ist, wodurch eine bedarfsgerechte und vorausschauende Handhabung und/oder Verwertung des RDB ermöglicht ist, wird in den Offenbarungsgehalt einbezogen.

Die weitere Darlegung der Erfindung sowie vorteilhafter Ausgestaltungen erfolgt nachfolgend anhand einiger Figuren und Ausführungsbeispiele.

Es zeigen:
- Fig. 1: Beispielhaft ausgestaltetes Verfahren zur fachgerechten Handhabung und/oder Verwertung von strahlenbelastetem Material, insbesondere eines Reaktordruckbehälters,
- Fig. 2: Reaktordruckbehälter mit Einbauten, sowie
- Fig. 3: Beispielhaft ausgestaltetes System zur fachgerechten Handhabung und/oder Verwertung von strahlenbelastetem Material, insbesondere eines Reaktordruckbehälters.

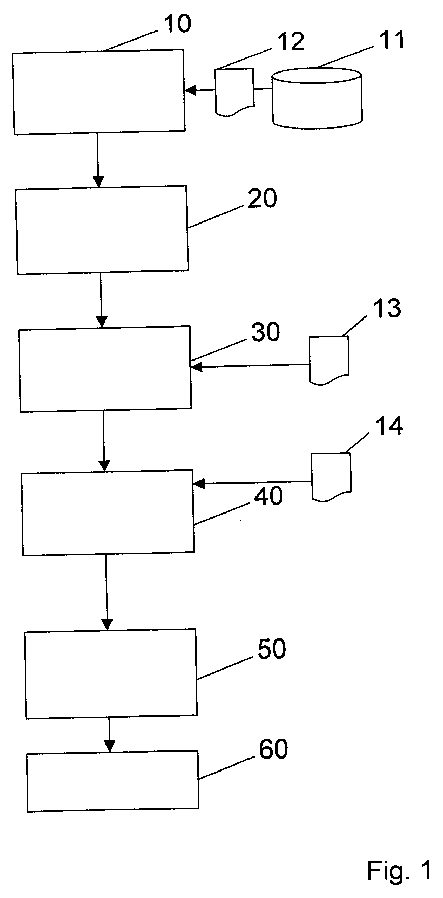

In Fig. 1 ist ein beispielhaftes Verfahrensschema zur vorausschauenden Handhabung und/oder Verwertung von strahlenbelastetem Material eines Kernreaktors beziehungsweise des Reaktordruckbehälters sowie seiner Einbauten im Besonderen gezeigt.

In einem vorbereitenden ersten Schritt 10 wird die Werkstoffzusammensetzung der verschiedenen strahlenbelasteten Materialien bestimmt, wobei unter strahlenbelasteten Materialien diejenigen Materialien zu verstehen sind, die bei bestimmungsgemäßer Verwendung im Reaktor radioaktiver Strahlung ausgesetzt sind. Die Bestimmung der Werkstoffzusammensetzung erfolgt im Zusammenwirken mit Datenbanken und/oder Datenspeichern 11 mit abrufbar gespeicherten Informationen 12 bezüglich der Werkstoffzusammensetzungen der verschiedenen Materialien, beispielsweise aus der Bauphase des Kraftwerks. Auch ist vorsehbar, dass derartige Werkstoffinformationen durch Probenentnahme und anschließende Analyse mittels einer Analyseeinheit, beispielsweise ein Massenspektrometer oder ein Röntgenspektrometer gewonnen und auf einem Datenspeicher zur weiteren Verarbeitung abgelegt werden.

Nach Ermittlung der Werkstoffzusammensetzung, wobei es sich beim Grundwerkstoff des RDB vornehmlich um 22NiMoCr37 handelt, wird in einem zweiten Schritt 20 die Aktivität des strahlenbelasteten Materials bestimmt, wobei unter dem Begriff Material jedwede Teile und/oder Komponenten und/oder Einbauten eines Kernreaktors, beispielsweise die Hülle des Reaktordruckbehälters, die als Plattierung ausgeführte innere Korrosionsschutzschicht, der Kernbehälter, der Tragwerkzylinder, die Gitterplatten sowie die Tragplatten und Stutzen zu verstehen sind, bestimmt. Zur Bestimmung der Aktivität ist vorteilhaft Gammaspektrometrie einsetzbar.

Die Bestimmung der Aktivität wird ortsaufgelöst durchgeführt, wobei eine Art Vermessungs- oder Analyseraster über das Innere des Reaktors beziehungsweise das Innere des Reaktordruckbehälters inklusive Einbauten gelegt wird.

Dabei kann davon ausgegangen werden, dass die durch die Neutronenstrahlung verursachte Aktivierung der verschiedenen Werkstoffe des Reaktordruckbehälters mit zunehmendem Abstand vom Reaktorkern stark abnimmt.

In einem weiteren dritten Schritt 30 wird dann das Abklingverhalten der im jeweilig aktivierten Material und/oder Werkstoff enthaltenen Radionuklide ermittelt oder zumindest näherungsweise bestimmt, beispielsweise anhand von Tabellen und/oder Berechnungsformeln und/oder Halbwertszeiten 13.

In einem vierten Schritt 40 wird vorgabenabhängig anhand der ermittelten Aktivitätswerte eine vorausschauende Bewertung und Selektion derjenigen Materialien durchgeführt, welche einer Wiederverwertung zuführbar sind.

Dabei finden insbesondere im Strahlenschutzgesetz und/oder internationalen Regelwerken angegebene Freigrenzen zur Entlassung von strahlenbelastetem Material aus dem Geltungsbereich des Atomgesetztes, als Vorgaben 14 Berücksichtigung.

Anhand des Bewertungsergebnisses werden im vierten Schritt 40 Materialien und/oder Teile und/oder Bereiche des Reaktordruckbehälters inklusive seiner Einbauten bestimmt und/oder gruppiert, welche
I. unmittelbar freigebbar und der Verwertung zuführbar sind ,
II. nach Zwischenlagerung für einen vorbestimmten endlichen Zeitraum, der beispielsweise auf 50 Jahre festlegbar ist, freigebbar und der Wiederverwertung zuführbar sind,
III. welche endzulagern und damit einer Verwertung nicht zuführbar sind.

Vorteilhaft erfolgt die Verfahrensdurch- beziehungsweise Verfahrensausführung dabei automatisiert und/oder unter Verwendung eines entsprechend ausgebildeten Systems.

Schrittweise werden nunmehr die einer Wiederverwertung nicht zuführbaren strahlenbelasteten Materialien und/oder Bereiche und/oder Teile der dritten Gruppe entnommen und endgelagert, und/oder die nach Zwischenlagerung freigebbaren Materialien und/oder Bereiche der zweiten Gruppe entnommen und zwischengelagert, und/oder die unmittelbar freigebbaren Materialien und/oder Bereiche der ersten Gruppe entnommen und wiederverwertet.

Zu den Materialien der dritten Gruppe zählt in aller Regel die Plattierung der Reaktordruckbehälters (RDB). Diese ist in aller Regel aus einer korrosionsbeständigen ChromNickelEisenlegierung Inconel NiCr15Fe aufgebaut. Eine beispielhaft durchgeführte Analyse hat dabei ergeben, dass die Aktivität des Werkstoffs der Plattierung mit einem Nickel-Gehalt von > 70% aufgrund der vergleichsweise großen Halbwertszeiten der vorkommenden Nuklide Ni⁵⁹, ca. 76000 Jahre, und Ni⁶³, ca. 100 Jahre, nicht innerhalb eines angemessenen Zeitraums, beispielsweise von 50 Jahren, auf Werte reduziert werden kann, die eine Freigabe aus dem Geltungsbereich des Atomgesetzes zulassen würden.

Verfahrensgemäß wird deshalb davon ausgegangen, dass in einem fünften Schritt 50 zunächst die Plattierung des Reaktordruckbehälters abzutragen, zu entnehmen, in abgeschirmten Behältern (Containern) zu verpacken und endzulagern ist.

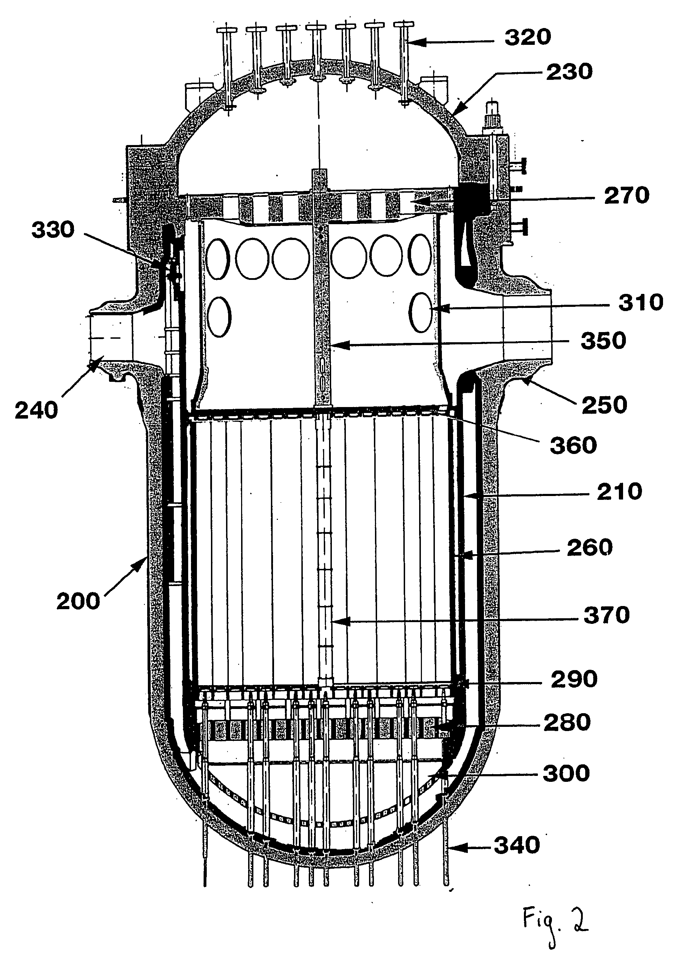

Nach Entnahme der Plattierung können dann in weiteren Schritten 60 die übrigen Materialien und/oder Teile und/oder Bereiche des Reaktors respektive des Reaktordruckbehälters (wie in Fig. 2 gezeigt) separat entnommen und der Wiederverwertung zugeführt werden, wobei die verschiedenen Materialien und/oder Teile und/oder Bereiche entsprechend ihrem Aktivierungsgrad für unterschiedliche Zeiträume bis zu ihrer Freigabe zwischengelagert werden.

Die Zwischenlagerung kann dabei vorteilhaft auch auf dem Kraftwerksgelände erfolgen.

In Fig. 2 ist ein beispielhaft ausgebildeter Reaktordruckbehälter 200 mit wiederverwertbaren Einbauten, nach Entnahme der Plattierung, gezeigt. Der Plattierung obliegt die Aufgabe den RDB 200 beziehungsweise seinen Grundwerkstoff vor Korrosion zu schützen.

Der verbleibende RDB 200 mit Einbauten umfasst den eigentlichen Reaktor- oder Kernbehälter 210 sowie ein Be- und Entladesystem 220 zum Einbringen und Entnehmen beziehungsweise Auswechseln der Regelstäbe 230. Auch die Ein- 240 und Austrittsstutzen 250 des Kühlmittelstroms sind angegeben. Der RDB 200 weist weiterhin eine Tragekonstruktion auf, in welcher der Reaktorkern ruht und der Kühlmittelstrom auf die einzelnen Brennelemente verteilt wird. Diese sieht eine Kernumfassung 260, eine obere Tragplatte 270, eine untere Tragplatte 280, eine untere Gitterplatte 290, einen Strömungsverteiler 300, sowie einen inneren Tragwerkszylinder 310 vor. Darüber hinaus sind noch weitere Einbauten vorgesehen, wie beispielsweise Stutzen für den Steuerelementantrieb 320, eine Überströmvorrichtung 330, Führungsrohre für eine Innenkerninstrumentierung 340, ein Steuerelementführungsrohr 350, sowie eine obere Gitterplatte 360. All diese vorgenannten Einbauten und/oder Teile des RDB sind verfahrensgemäß zu analysieren, zu bewerten, bewertungsabhängig zu selektieren und gruppieren und dementsprechend, falls möglich zu verwerten.

Weiterhin ist in Fig.2 ein Brennelement 370 angedeutet. Diese werden nach ca. 3 bis 4 Jahren ausgewechselt und danach in ein Zwischenlager verbracht, damit der größte Teil der Radioaktivität abklingt.

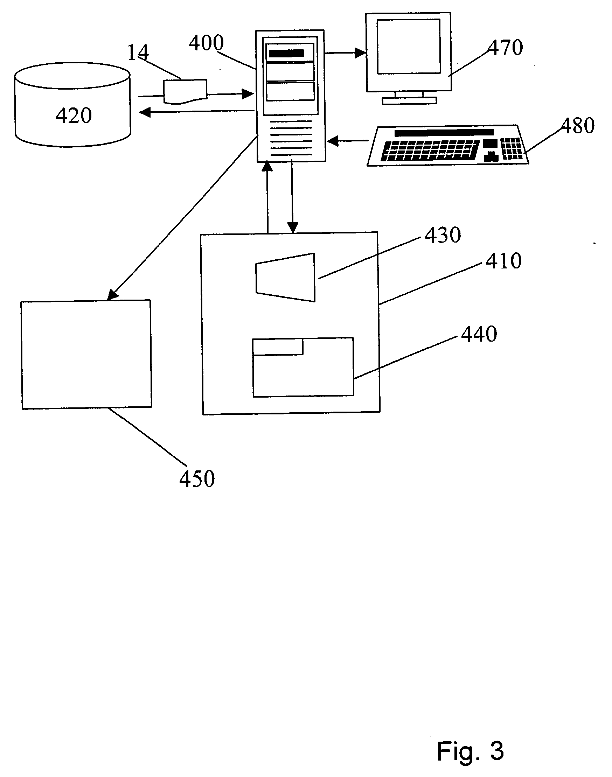

In Fig. 3 ist ein beispielhaft ausgebildetes System zur Ausführung des erfindungsgemäßen Verfahrens gezeigt. Vorgenanntes System für eine vorausschauende Handhabung und/oder Verwertung von strahlenbelastetem Material eines Kernreaktors, insbesondere des Reaktordruckbehälters sowie seiner Einbauten, umfasst dabei wenigstens eine Verarbeitungseinheit 400 sowie wenigstens eine Analyseeinrichtung 410, welche im Zusammenwirken die Aktivität des strahlenbelasteten Materials und/oder das Abklingverhalten wenigstens eines im aktivierten Material enthaltenen Radionuklids ermitteln und/oder im Zugriff auf wenigstens einen Datenspeicher 420 vorgabenabhängig anhand der ermittelten Aktivitätswerte eine vorausschauende Bewertung und Selektion derjenigen Materialien durchführen, welche einer Wiederverwertung zuführbar sind.

Die vorausschauende Bewertung erfolgt unter Berücksichtigung vorbestimmter Freigabegrenzen, insbesondere im Strahlenschutzgesetz und/oder internationalen Regelwerken vorgegebene Freigabegrenzen 14, welche vorteilhaft auf dem wenigstens einen Datenspeicher 420 ab- und aufrufbar gespeichert sind.

Die wenigstens eine Analyseeinrichtung 410 weist dabei Mittel 430 auf, beispielsweise α-, β- oder γ-Strahlenmesser und/oder Geigerzähler, um die Aktivierung des Grundwerkstoffes des jeweiligen strahlenbelasteten Materials, insbesondere des Reaktordruckbehälters, zu erfassen und im Zusammenwirken mit der Verarbeitungseinheit zu analysieren.

Des Weiteren umfasst die Analyseeinrichtung 410 Mittel 440, um die Werkstoffzusammensetzung eines Materials zu bestimmen, wie beispielsweise Massenspektrometer und/oder ein Röntgenspektrometer und/oder optische Spektrometer. Auch Mittel zur Durchführung chemischer Analysen sind vorsehbar.

Die ermittelten Werkstoffzusammensetzungen und/oder Aktivitäten der verschiedenen Materialien und/oder Bereiche und/oder Teile, insbesondere des Reaktordruckbehälters und/oder seiner Einbauten, sind vorteilhaft auf dem wenigstens einen Datenspeicher auf- und abrufbar speicherbar.

Auch können Werkstoffzusammensetzungen der verschiedenen Materialien und/oder Bereiche und/oder Teile, insbesondere des Reaktordruckbehälters 200 und/oder seiner Einbauten, auf dem wenigstens einen Datenspeicher bereits auf- und abrufbar hinterlegt sein, wenn diese beispielsweise aus der Bauphase und/oder den Materialspezifikationen her bekannt sind.

Die Verarbeitungseinheit 400 bestimmt im Zusammenwirken mit der Analyseeinrichtung 410, in Abhängigkeit der ermittelten Werkstoffzusammensetzung die Aktivierung des jeweiligen Materials und/oder vorbestimmter Bereiche bestimmt und/oder ermittelt das Abklingverhalten der einzelnen Radionuklide in den aktivierten Bereichen, zumindest näherungsweise. Die Bestimmung des Abklingverhaltens erfolgt im Zugriff auf in der Verarbeitungseinheit 400 oder dem Datenspeicher 420 ausführbar gesicherten Regeln und Informationen, wie beispielsweise den Halbwertzeiten der verschiedenen Radionuklide und/oder Zerfallsgesetze. Weiterhin bestimmt die Verarbeitungseinheit 400 anhand des jeweilig ermittelten Abklingverhaltens und der Aktivität denjenigen Zeitpunkt, wann die Aktivität eines Materials und/oder Bereichs vorbestimmte Freigabegrenzen 14 erreicht und/oder unterschreitet, wobei der Zeitpunkt des Unterschreitens vorbestimmter Freigrenzen für jedes Radionuklid spezifisch ermittelt wird.

Resultierend ist durch die Verarbeitungseinheit 400 somit bestimmt, wann ein Material und/oder ein Bereich freigebbar und der Wiederverwertung zuführbar ist, nämlich wenn seine Aktivität vorbestimmte Freigrenzen 14 erreicht und/oder unterschreitet.

Anhand des Bewertungsergebnisses selektiert und gruppiert die Verarbeitungseinheit 400 Materialien und/oder Bereiche des RDB, die
I. unmittelbar freigebbar und der Verwertung zuführbar sind ,
II. nach Zwischenlagerung für einen vorbestimmten endlichen Zeitraum freigebbar und der Wiederverwertung zuführbar sind,
III. welche endzulagern und damit einer Verwertung nicht zuführbar sind.

Das System umfasst wenigstens eine operative Einheit 450 mit Mitteln, um die gruppierten Materialien und/oder Bereiche entsprechend aufzuteilen und/oder dem Reaktor zu entnehmen. Diese Mittel können sowohl menschliche Einheiten, insbesondere Ingenieure und Arbeiter, und/oder Maschinen oder Geräte umfassen, wie beispielsweise Schneidbrenner, Roboter, Kräne, hydraulische Zangen und Scheren.

Weiterhin sind entsprechende Behälter (Container) zum Zwischen- und/oder Endlagern, beispielsweise der Plattierung, sowie zum Transport, beispielsweise Castorbehälter, der Materialien und/oder Teile des RDB vorsehbar.

Zur Ausgabe und Eingabe von Informationen und Ergebnissen sind wenigstens noch eine Anzeigeeinheit 470 sowie wenigstens eine Eingabeeinheit 480 vorsehbar.

## Patentansprüche

1. Verfahren für eine bedarfsgerechte und vorausschauende Handhabung und Verwertung von strahlenbelastetem Material des Reaktordruckbehälters (200) eines stillgelegten Kernreaktors sowie der Einbauten dieses Reaktordruckbehälters, wobei die Aktivität sowie das Abklingverhalten wenigstens eines im aktivierten Material enthaltenen Radionuklids ortsaufgelöst ermittelt und vor der Entnahme des jeweiligen Materials vorgabenabhängig anhand der ermittelten Aktivitätswerte eine vorausschauende Bewertung und Selektion derjenigen Materialien unter Einsatz eines Systems mit wenigstens einer Datenverarbeitungseinheit (400) sowie wenigstens einer mit der Datenverarbeitungseinheit zusammenwirkender Analyseeinrichtung (410) und im Zugriff auf wenigstens einen Datenspeicher (420) durchgeführt wird, welche einer Wiederverwertung zuführbar sind, wobei bei der vorausschauenden Bewertung anhand des jeweils ermittelten Abklingverhaltens und der Aktivität derjenige Zeitpunkt bestimmt und angegeben wird, bei welchem die Aktivität eines Materials oder Bereichs des Reaktordruckbehälters sowie seiner Einbauten eine vorbestimmte Freigabegrenze erreicht oder unterschreitet, wodurch bestimmt wird, wann welches Material oder wann welcher Bereich der Wiederverwertung zuführbar ist, und wobei die einer Wiederverwertung nicht zuführbaren strahlenbelasteten Materialien oder Bereiche oder Teile entnommen und endgelagert werden, und die nach Zwischenlagerung freigebbaren Materialien oder Bereiche entnommen und zwischengelagert werden, und die unmittelbar freigebbaren Materialien oder Bereiche entnommen und wiederverwertet werden.

2. Verfahren nach Anspruch 1 wobei zur Ermittlung der Aktivität und/oder ihres Abklingverhaltens schrittweise
• eine Analyse der Aktivierung des Grundwerkstoffes von strahlenbelastetem Material durchgeführt wird und/oder
• in Abhängigkeit der Werkstoffzusammensetzung (13) des jeweiligen Materials, insbesondere des Reaktordruckbehälters, oder wenigstens eines Teils davon die Aktivierung vorbestimmbarer Bereiche bestimmt wird, und/oder das Abklingverhalten der einzelnen Radionuklide in den aktivierten Bereichen, zumindest näherungsweise bestimmt wird.

3. Verfahren nach einem der vorherigen Ansprüche, wobei Aktivität, Abklingverhalten und der Zeitpunkt des Unterschreitens vorbestimmter Freigabegrenzen (14) für jedes vorkommende Radionuklid spezifisch ermittelt werden.

4. Verfahren nach einem der vorherigen Ansprüche, wobei anhand des Bewertungsergebnisses bei der Selektion Materialien und/oder Bereiche bestimmt und/oder gruppiert werden, die
i. unmittelbar freigebbar und der Verwertung zuführbar sind,
ii. nach Zwischenlagerung für einen vorbestimmten endlichen Zeitraum freigebbar und der Wiederverwertung zuführbar sind,
iii. welche endzulagern und damit einer Verwertung nicht zuführbar sind.

5. Verfahren nach einem der vorherigen Ansprüche, wobei das Verfahren automatisiert durchgeführt wird.

6. Verfahren nach Anspruch 4, wobei der endliche Zeitraum selektiv vorgebbar ist und insbesondere mindestens 50 Jahre beträgt.

7. Verfahren nach einem der Ansprüche 4 bis 6, wobei dem Kraftwerk schrittweise die einer Wiederverwertung nicht zuführbaren strahlenbelasteten Materialien und/oder Bereiche und/oder Teile entnommen und endgelagert werden, und/oder die nach Zwischenlagerung freigebbaren Materialien und/oder Bereiche entnommen und zwischengelagert werden, und/oder die unmittelbar freigebbaren Materialien und/oder Bereiche entnommen und wiederverwertet werden.

8. Verfahren nach einem der vorherigen Ansprüche, wobei es zur vorausschauenden Handhabung und/oder Verwertung eines Reaktordruckbehälters und/oder dessen Einbauten angewendet wird, und wobei zunächst die Plattierung des Reaktordruckbehälters abgetragen, entnommen und/oder endgelagert wird.

9. Verfahren nach Anspruch 8, wobei nach Entnahme der Plattierung die übrigen Materialien und/oder Teile und/oder Bereiche separat entnommen und der Wiederverwertung zugeführt werden, und wobei die verschiedenen Materialien und/oder Teile und/oder Bereiche entsprechend ihrem Aktivierungsgrad für unterschiedliche Zeiträume bis zu ihrer Freigabe zwischengelagert werden.

10. Verfahren nach einem der Ansprüche 4 bis 9, wobei die Zwischenlagerung auf dem Kraftwerksgelände erfolgt.

## Claims

1. Method for as-needed and anticipatory handling and recycling of radioactive material from the reactor pressure vessel (200) of a shut-down nuclear reactor and the internals of this reactor pressure vessel, wherein the activity and the decay of at least one radionuclide contained in the activated material are determined in a spatially resolved manner and, depending on the specified requirements, an anticipatory assessment and selection of the materials that can be passed on for recycling is carried out before the removal of the respective material on the basis of the determined activity values by using a system with at least one data processing unit (400) and at least one analysis device (410) interacting with the data processing unit and by accessing at least one data memory (420), wherein the point in time at which the activity of a material or region of the reactor pressure vessel and its internals reaches or goes below a predetermined release limit is determined and indicated in the anticipatory assessment on the basis of the respectively determined decay and activity, whereby it is determined when which material or when which region can be passed on for recycling, and wherein the radioactive materials, regions or parts that cannot be passed on for recycling are removed and disposed of in ultimate storage, and the materials or regions that can be released after temporary storage are removed and temporarily stored, and the materials or regions that can be released immediately are removed and recycled.

2. Method according to Claim 1, wherein, for determining the activity and/or its decay, step by step
• an analysis of the activation of the base material of radioactive material is carried out and/or
• dependent on the material composition (13) of the respective material, in particular of the reactor pressure vessel, or at least part thereof, the activation of predeterminable regions is determined, and/or the decay of the individual radionuclides in the activated regions is determined at least by approximation.

3. Method according to one of the preceding claims, wherein the activity, decay and point in time at which the activity goes below predetermined release limits (14) are determined specifically for each radionuclide occurring.

4. Method according to one of the preceding claims, wherein, on the basis of the assessment results, the selection includes determining and/or grouping materials and/or regions that
i. can be released and passed on for recycling immediately,
ii. can be released and passed on for recycling after temporary storage for a predetermined finite period of time,
iii. have to be disposed of in ultimate storage, and consequently cannot be passed on for recycling.

5. Method according to one of the preceding claims, wherein the method is carried out in an automated manner.

6. Method according to Claim 4, wherein the finite period of time can be selectively specified in advance and in particular is at least 50 years.

7. Method according to one of Claims 4 to 6, wherein step by step the radioactive materials and/or regions and/or parts that cannot be passed on for recycling are removed from the power plant and disposed of in ultimate storage, and/or the materials and/or regions that can be released after temporary storage are removed and temporarily stored, and/or the materials and/or regions that can be released immediately are removed and recycled.

8. Method according to one of the preceding claims, wherein it is used for the anticipatory handling and/or recycling of a reactor pressure vessel and/or its internals, and wherein first the cladding of the reactor pressure vessel is taken off, removed and/or disposed of in ultimate storage.

9. Method according to Claim 8, wherein, after the removal of the cladding, the other materials and/or parts and/or regions are separately removed and passed on for recycling, and wherein, according to their degree of activation, the various materials and/or parts and/or regions are temporarily stored for different periods of time until their release.

10. Method according to one of Claims 4 to 9, wherein the temporary storage takes place on the site of the power plant.

## Revendications

1. Procédé de manipulation et de valorisation adaptées au besoin et aux prospectives de matière irradiée de la cuve sous pression de réacteur (200) d'un réacteur nucléaire à l'arrêt ainsi que des objets installés de cette cuve sous pression de réacteur, l'activité ainsi que le comportement de décroissement d'au moins un radionucléide contenu dans la matière activée étant déterminés avec résolution spatiale et, avant le prélèvement de la matière correspondante, une évaluation et une sélection prédictives des matières qui peuvent être acheminées à un recyclage est effectuée en fonction des indications à l'aide des valeurs d'activité déterminées en utilisant un système comprenant au moins une unité de traitement de données (400) ainsi qu'au moins un dispositif d'analyse (410) qui coopère avec l'unité de traitement de données et ayant accès à au moins une mémoire de données (420), l'instant auquel l'activité d'une matière ou de la zone de la cuve sous pression de réacteur ainsi que de ses objets installés atteint une limite de libération prédéfinie ou dévient inférieure à celle-ci étant déterminé et indiqué lors de l'évaluation prédictive à l'aide du comportement de décroissement respectivement déterminé et de l'activité, ce qui permet de définir à quel moment quelle matière ou à quel moment quelle zone peut être acheminée au recyclage, et les matières ou les zones ou les parties irradiées ne pouvant pas être acheminées à un recyclage étant prélevées et mises en stockage définitif, et les matières ou les zones qui peuvent être libérées après un stockage temporaire étant prélevées et mises en stockage temporaire, et les matières ou les zones qui peuvent être libérées immédiatement étant prélevées et recyclées.

2. Procédé selon la revendication 1, selon lequel, pour la détermination de l'activité et/ou de son comportement de décroissement, les opérations suivantes sont exécutées pas à pas
* une analyse de l'activation du matériau de base de la matière irradiée est effectuée et/ou
* suivant la composition en matériau (13) de la matière correspondante, notamment de la cuve sous pression de réacteur ou d'au moins une partie de celle-ci, l'activation de zones pouvant être prédéfinies est définie et/ou le comportement de décroissement des radionucléides individuels dans les zones activées est défini au moins de manière approximative.

3. Procédé selon l'une des revendications précédentes, selon lequel l'activité, le comportement de décroissement et l'instant de franchissement vers le bas de limites de libération (14) prédéfinies sont déterminés spécifiquement pour chaque radionucléide présent.

4. Procédé selon l'une des revendications précédentes, selon lequel les matières et/ou les zones qui
i. peuvent être libérées et acheminées au recyclage immédiatement,
ii. peuvent être libérées et acheminées au recyclage après stockage temporaire pendant une période finie prédéfinie,
iii. doivent être mises en stockage définitif et ne peuvent ainsi pas être acheminées au recyclage sont définies et/ou groupées à l'aide du résultat de l'évaluation lors de la sélection.

5. Procédé selon l'une des revendications précédentes, selon lequel le procédé est exécuté de façon automatisée.

6. Procédé selon la revendication 4, selon lequel la période finie peut être prédéfinie de manière sélective et est notamment égale au minimum à 50 ans.

7. Procédé selon l'une des revendications 4 à 6, selon lequel, pas à pas,
les matières et/ou les zones et/ou les parties irradiées qui ne peuvent pas être acheminées à un recyclage sont prélevées de la centrale nucléaire et mises en stockage définitif,
et/ou les matières et/ou les zones qui peuvent être libérées après un stockage temporaire sont prélevées et mises en stockage temporaire
et/ou les matières et/ou les zones qui peuvent être libérées immédiatement sont prélevées et recyclées.

8. Procédé selon l'une des revendications précédentes, selon lequel il est employé pour la manipulation et/ou la valorisation prospectives d'une cuve sous pression de réacteur et/ou de ses objets installés et selon lequel le placage de la cuve sous pression de réacteur est tout d'abord enlevé, prélevé et/ou mis en stockage définitif.

9. Procédé selon la revendication 8, selon lequel, après le prélèvement du placage, les matières et/ou pièces et/ou zones restantes sont prélevées séparément et acheminées au recyclage, et selon lequel les différentes matières et/ou pièces et/ou zones sont mises en stockage temporaire pendant des périodes différentes jusqu'à leur libération en fonction de leur degré d'activation.

10. Procédé selon l'une des revendications 4 à 9, selon lequel le stockage temporaire a lieu sur le terrain de la centrale nucléaire.
